# EUROPEAN PATENT SPECIFICATION

(11) **EP 0 293 977 B1**
(45) Date of publication and mention of the grant of the patent: **18.11.1993**
(21) Application number: 88201055.6
(22) Date of filing: 25.05.1988
(51) Int. Cl.: C08G 59/56, C08G 59/62

(54) **Process for preparing phenolic curing agents for epoxy resins**
Herstellungsverfahren von phenolischen Härtern für Epoxy-Harze
Procédé de préparation de durcisseurs phénoliques pour résines époxydes

(30) Priority: 29.05.1987 US 55653
(43) Date of publication of application: 07.12.1988
(73) Proprietor: SHELL INTERNATIONALE RESEARCH MAATSCHAPPIJ B.V., 2596 HR Den Haag (NL)
(72) Inventor: Marx, Edward John, Houston Texas 77070 (US)

(56) References cited:
- GB-A- 2 022 592

## Description

This invention relates to a process for preparing curing agents for epoxy resins.

Bisphenol-A (BPA) terminated epoxy resins are useful as solid curing agents for epoxy powder coatings. Such phenolic curing agents are conventionally prepared by reacting about a 65:35 weight ratio of BPA with a low molecular weight liquid epoxy resin to produce a reaction product having a weight per phenolic of about 270 and made up primarily of the relatively low molecular weight BPA-terminated liquid epoxide and unreacted BPA. The uncatalysed reaction of these phenolic curing agents with epoxy resins is very slow, and a catalyst such as 2-methylimidazole (2-MI) is often incorporated by melt-blending into the molten curing agent at the end of the production sequence.

Because of an industrial need for faster curing powders, higher levels of 2-MI are desirable. It has been found, apparently because of a salt formation between 2-MI and phenolic hydroxyl groups, that these higher levels of 2-MI yield low melting point mixtures which tend to sinter during storage. Resins or curing agents which sinter can cause problems during application as powder coatings. Examples of such problems are the blockage of application equipment due to impact fusion and the formation of "cobwebs" during electrostatic application to hot objects.

It is therefore an object of the invention to prepare phenolic curing agents which have a weight per phenolic of 240 to 280 and, when combined with imidazole cure accelerators, exhibit reduced tendency to sinter during storage. Thereto a process for preparing a curing agent for an epoxy resin is provided, said process comprising:
(a) contacting a liquid linear epoxy resin having an average of 2 epoxy groups per molecule and an epoxy equivalent weight (EEW) of less than 500, with a dihydric phenol in the presence of a catalytic amount of an epoxy advancement catalyst to produce a solid diepoxy resin having an average EEW within the range of 500 to 8000, preferably 800 to 3500;
(b) contacting the reaction product of step (a) with a molar excess of the dihydric phenol in the presence of the advancement catalyst to produce a linear phenolic hydroxyl-terminated resin having a weight per hydroxyl within the range of 240 to 280; and
(c) adding to the product of step (b) at least 1 weight percent of an imidazole compound.

The product prepared in accordance with the process of the invention is capable of maintaining an acceptably high melting point and thus is less susceptible to sintering with storage than previous imidazole containing phenolic epoxy curing agents.

The linear phenolic hydroxyl-terminated resin having a weight per hydroxyl within the range of 240 to 280 can be prepared in a catalysed two step epoxy "advancement" reaction by reacting the low molecular weight liquid linear epoxy resin with dihydric phenol added in two stages.

Preferred epoxy resins include liquid glycidyl ethers of dihydric phenols and dihydric alcohols. Most preferred are the diglycidyl ethers of BPA having an average molecular weight between 340 and 900 and an EEW (ASTM D-1652) of between 170 and 300. Such epoxy resins are available commercially as, for example, EPIKOTE 828, a liquid epoxy resin having a molecular weight of 376 and an EEW of 185-192.

The dihydric phenol reactants of the advancement reactions are phenols having two hydroxyl groups attached to an aromatic or polyaromatic nucleus, such as, for example, resorcinol, catechol, 2,2-bis(4-hydroxyphenyl)propane, 4,4′-sulfonyldiphenol and dihydroxy diphenyl methane. Preferred dihydric phenols are bis(hydroxyphenyl)alkanes, such as BPA.

The advancement reaction between the liquid linear diepoxy resin and the dihydric phenol (first step) is carried out in the presence of a catalytic amount of a suitable catalyst for a time of generally 1-2 hours. Various classes of epoxy advancement catalysts are known in the art and include the phosphonium salts described in U.S. 3,477,990 and 4,352,918, for example. The preferred advancement catalysts are ethyl triphenylphosphonium iodide (ETPPI) and tetramethylammonium chloride. The amount of the catalyst used in an epoxy advancement reaction can vary over a wide range, but the catalyst will generally be present in the reaction mixture in an amount of from 0.001 to 2 weight percent, preferably from 0.01 to 0.5 weight percent, based on the weight of the reactants.

The relative amount of the starting reactants depends upon the EEW of the advancement product desired. For the most preferred advancement products having an EEW of between 850 and 950, 0.6 to 0.8 mole of the dihydric phenol will generally be reacted with each mole of a liquid linear diepoxy resin.

When the first step advancement reaction has proceeded to a solid diepoxy resin having the desired EEW, dihydric phenol sufficient to add phenolic terminal groups to the diepoxy resin and to produce a final product having a weight per phenolic within the range of 240 to 280 is added to the reaction mixture, optionally along with additional catalyst. The amount of the dihydric phenol added will depend in part upon the amount of dihydric phenol consumed in the first advancement reaction, but will be a molar excess over the solid diepoxy resin present in order to ensure phenolic termination of the diepoxy resin. The molar ratio of the total amount of dihydric phenol added, as a terminal group on, or incorporated in the solid diepoxy resin, or as unreacted dihydric phenol, to the starting liquid diepoxy resin is within the range of 2.5:1 to 3.5:1, preferably 3:1.

When the starting material is a diglycidyl ether of BPA having a molecular weight of 400 and an EEW of 190 and the dihydric phenol is BPA, the weight ratio of total dihydric phenol to diepoxy resin will fall within the range of 63:37 to 68:32, preferably 65:35.

The advancement reactions may be carried out in the presence or absence of solvents or diluents such as xylene, toluene or cyclohexane. Generally, the reactants will be liquid at the reaction temperature and the reaction can be carried out without the addition of solvents or diluents.

The advancement reactions are generally carried out by combining the diepoxy resin with part of the dihydric phenol at a starting temperature of 100-120°C, adding the advancement catalyst, and allowing the reaction to exotherm to a temperature of 160-200°C.

The second stage reaction mixture is maintained at 160-200°C for 1-2 hours and the phenolic product mixture of linear phenolic hydroxyl terminated resin and unreacted dihydric phenol is recovered. The imidazole compound is then mixed with the phenolic mixture, preferably by melt-blending prior to cooling, and the mixture is discharged from the reaction vessel and solidified by cooling.

The preferred imidazole compounds for use in the envisaged composition are 1-methylimidazole, 2-methylimidazole, 1,2-dimethylimidazole, 2-ethylimidazole, 2,4-ethylmethylimidazole, 2-isopropylimidazole, 1-decylimidazole and 2-phenylimidazole, for example. The most preferred imidazole is 2-methylimidazole.

The imidazole compound will be present in the composition in an amount effective to increase the cure rate of the phenolic curing agent when used as a curing agent for epoxy resins, generally in an amount of at least 1 weight percent, preferably from 1 to 15 weight percent, most preferably 2 to 12 weight percent. The depression of melting point which is addressed by the invention is most marked at levels of the imidazole compound greater than 2 weight percent, and the effectiveness of the invention in maintaining an acceptably high melt point is thus most noticeable at these levels.

The final mixture of phenolic-terminated epoxy resin, dihydric phenol and imidazole compound will preferably have a melting point of greater than 75°C even at levels of imidazole compound of 3 weight percent or greater.

The curing agent prepared in accordance with the process of this invention can be used with a wide variety of epoxy resins and is particularly suited for ultimate application in epoxy resin powder coating formulations. Generally the curing agent will be used with an epoxy resin in an equivalent ratio of from 0.5 to 1.5 equivalents of curing agent for each equivalent of epoxy resin. Powder coating formulations can be prepared by combining with the epoxy resin/curing agent system fillers, coloured pigments, flow additives and the like as is known in the art.

### Example

Table 1 below describes the compositions of four experimental phenolic curatives prepared to demonstrate the improvement in melting temperature made possible by the invention.

Comparative experimental product #1 represents a standard phenolic curative obtained by the direct reaction of a 3:1 molar ratio of BPA with EPIKOTE 828, the diglycidyl ether of BPA, in the presence of an ethyltriphenylphosphonium iodide (ETPPI) advancement catalyst. The reaction mixture was heated to 180_C and held for 2 hours. Experimental product #2 represents the product of the two-stage reaction in which an diepoxy resin of 900 EEW is first prepared and subsequently reacted with an excess of BPA to form a phenolic curing agent. Experimental product #3 represents the product of a two-stage reaction in which a relatively high equivalent weight resin (2769 EEW target) is first prepared and subsequently reacted with an excess of BPA to form a phenolic curing agent. In runs 2, and 3, the reaction mixtures were heated to 180°C and held for 1 hour for the first stage reaction and an additional hour for the second stage. 2-Methyl imidazole was added at the end of the second stage reaction and blended for 15 minutes.

In all cases, the total weight ratio of BPA to starting epoxy resin was 65:35. The resultant weight per phenolic in each case had a theoretical value of 260-270.

Table 2 shows the melting points of the experimental curing agents described above. Generally, allowing for normal experimental deficiencies, materials 2A and 3A show increased melting points relative to 1A. In addition, all generally show decreased melting points as the level of 2-methylimidazole (2-MI) is increased. Experimental materials 2 A-E and 3 A-E, however, all have melting points higher than material 1A through E, and higher than the target 75°C.

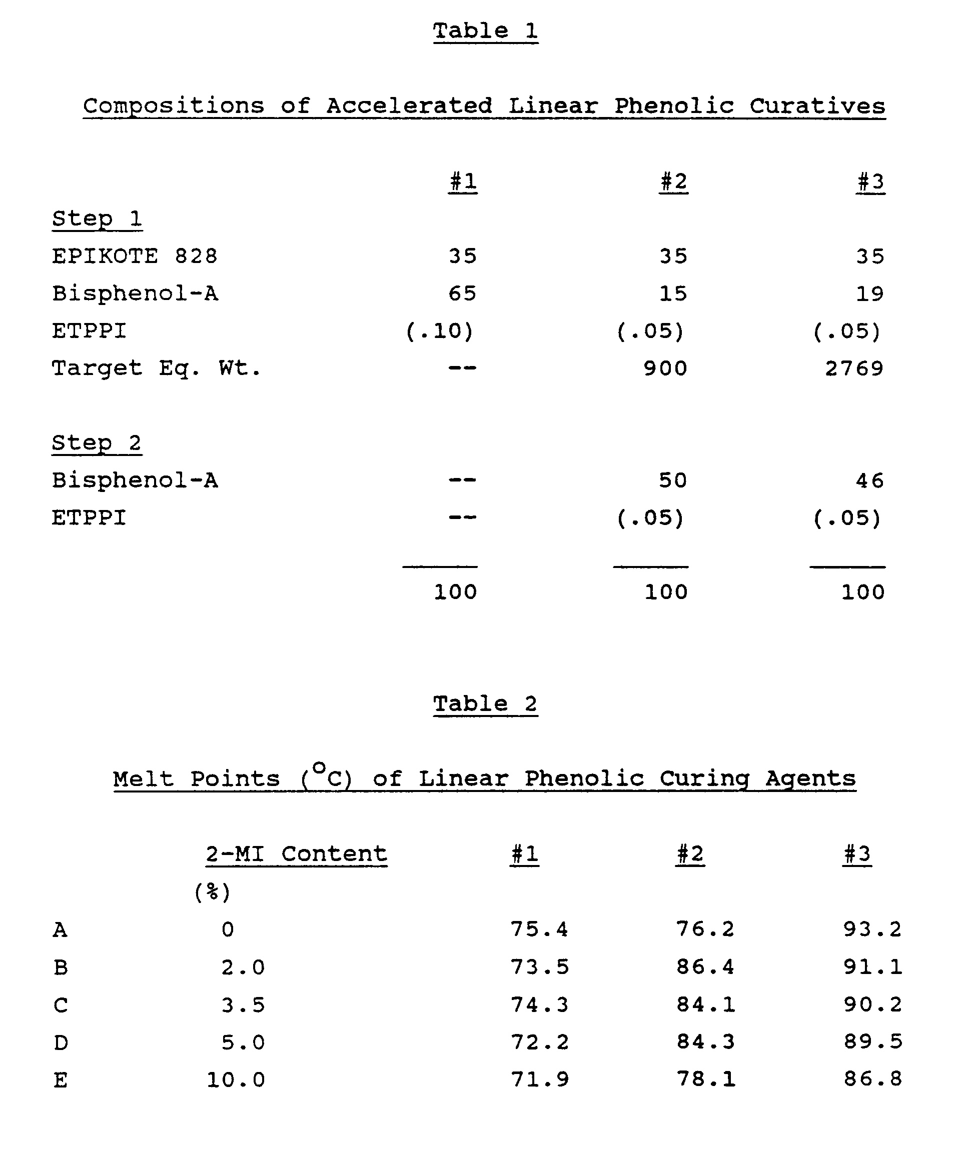

## Claims

1. A process for preparing a curing agent for an epoxy resin, said process comprising:
(a) contacting a liquid linear epoxy resin having an average of 2 epoxy groups per molecule and an epoxy equivalent weight (EEW) of less than 500 with a dihydric phenol in the presence of a catalytic amount of an epoxy advancement catalyst to produce a solid diepoxy resin having an average EEW within the range of 500 to 8000;
(b) contacting the reaction product of step (a) with a molar excess of the dihydric phenol in the presence of the advancement catalyst to produce a linear phenolic hydroxyl-terminated resin having a weight per hydroxyl within the range of 240 to 280; and
(c) adding to the product of step (b) at least 1 weight percent of an imidazole compound.

2. The process of claim 1 in which the linear diepoxy resin is a liquid glycidyl ether of a dihydric phenol or dihydric alcohol having an EEW of less than 300

3. The process of claim 1 in which the linear diepoxy resin is a diglycidyl ether of bisphenol-A having an EEW of between 170 and 300.

4. The process of any one of claims 1 to 3 in which the dihydric phenol is bisphenol-A.

5. The process of any one of claims 1 to 4 in which the solid diepoxy resin has an average EEW within the range of 800 to 3500.

6. The process of any one of claims 1 to 4 in which the solid diepoxy resin has an average EEW within the range of 850 to 950.

7. The process of any one of claims 1 to 6 in which the catalyst used is ethyl triphenylphosphonium phosphide in the range from 0.0001 to 2 weight percent.

8. The process of any one of claims 1 to 7 in which the molar ratio of dihydric phenol to liquid linear diepoxy resin is in the range of 2.5 to 1 to 3.5 to 1.

9. The process of any one of claims 1 to 8 in which the imidazole compound is 2-methyl imidazole.

10. A curing agent prepared with a process as claimed in any one of claims 1 to 9.

11. A powder coating composition comprising the curing agent as claimed claim 10.

## Patentansprüche

1. Ein Verfahren zur Herstellung eines Härtungsmittels für ein Epoxyharz, welches Verfahren die folgenden Schritte umfaßt:
(a) Kontaktieren eines flüssigen linearen Epoxyharzes mit durchschnittlich 2 Epoxygruppen je Molekül und einem Epoxyäquivalentgewicht (EEW) von weniger als 500 mit einem zweiwertigen Phenol in Gegenwart einer katalytischen Menge eines Epoxy-BeSchleunigungskatalysators zwecks Herstellung eines festen Diepoxyharzes mit einem durchschnittlichen EEW im Bereich von 500 bis 8000;
(b) Kontaktieren des Reaktionsprodukts aus Stufe (a) mit einem molaren Überschuß des zweiwertigen Phenols in Gegenwart des Beschleunigungskatalysators zwecks Herstellung eines linearen phenolischen Harzes mit endständigen Hydroxylgruppen mit einem Gewicht je Hydroxylgruppe im Bereich von 240 bis 280; und
(c) Zugabe mindestens 1 Gewichtsprozents einer Imidazolverbindung zu dem Produkt von Stufe (b).

2. Das Verfahren nach Anspruch 1, in welchem das lineare Diepoxyharz ein flüssiger Glycidyläther eines zweiwertigen Phenols oder zweiwertigen Alkohols mit einem EEW von weniger als 300 ist.

3. Das Verfahren nach Anspruch 1, in welchem das lineare Diepoxyharz ein Diglycidyläther von Bisphenol-A mit einem EEW zwischen 170 und 300 ist.

4. Das Verfahren nach einem der Ansprüche 1 bis 3, in welchem das zweiwertige Phenol Bisphenol-A ist.

5. Das Verfahren nach einem der Ansprüche 1 bis 4, in welchem das feste Diepoxyharz ein durchschnittliches EEW im Bereich von 800 bis 3500 aufweist.

6. Das Verfahren nach einem der Ansprüche 1 bis 4, in welchem das feste Diepoxyharz ein durchschnittliches EEW im Bereich von 850 bis 950 aufweist.

7. Das Verfahren nach einem der Ansprüche 1 bis 6, in welchem der eingesetzte Katalysator Ethyltriphenylphosphoniumphosphid ist , und im Bereich von 0,000 1 bis 2 Gewichtsprozent vorliegt.

8. Das Verfahren nach einem der Ansprüche 1 bis 7, in welchem das Molverhältnis des zweiwertigen Phenols zu dem flüssigen linearen Diepoxyharz im Bereich von 2,5:1 bis 3,5:1 liegt.

9. Das Verfahren nach einem der Ansprüche 1 bis 8, in welchem die Imidazolverbindung 2-Methylimidazol ist.

10. Ein Härtungsmittel, das durch ein Verfahren wie in einem der Ansprüche 1 bis 9 beansprucht, hergestellt worden ist.

11. Ein Pulverüberzugszusammensetzung, enthaltend das Härtungsmittel, wie in Anspruch 10 beansprucht.

## Revendications

1. Procédé de préparation d'un durcisseur pour une résine époxy, ce procédé comprenant :
(a) la mise en contact d'une résine époxy linéaire liquide ayant une moyenne de 2 groupes époxy par molécule et un poids équivalent d'époxyde (EEW) de moins de 500 avec un alcool dihydrique en présence d'une quantité catalytique d'un catalyseur d'avancement d'époxyde de manière à produire une résine diépoxy solide ayant un EEW moyen compris entre 500 et 8000 ;
(b) la mise en contact du produit de réaction de l'étape (a) avec un excès molaire du phénol dihydrique en présence du catalyseur d'avancement de manière à produire une résine linéaire à groupes terminaux hydroxyle phénolique ayant un poids par hydroxyle compris entre 240 et 280 ; et
(c) l'addition au produit de l'étape (b) d'au moins 1 % en poids d'un imidazole.

2. Le procédé selon la revendication 1, dans lequel la résine diépoxy linéaire est un éther glycidique liquide d'un phénol dihydrique ou d'un alcool dihydrique ayant un EEW de moins de 300.

3. Le procédé selon la revendication 1, dans lequel la résine diépoxy linéaire est un éther diglycidique de bisphénol A ayant un EEW compris entre 170 et 300.

4. Le procédé selon l'une quelconque des revendications 1 à 3, dans lequel le phénol dihydrique est le bisphénol A.

5. Le procédé selon l'une quelconque des revendications 1 à 4, dans lequel la résine diépoxy solide a un EEW moyen compris entre 800 et 3500.

6. Le procédé selon l'une quelconque des revendications 1 à 4, dans lequel la résine diépoxy solide a un EEW moyen compris entre 850 et 950.

7. Le procédé selon l'une quelconque des revendications 1 à 6, dans lequel le catalyseur utilisé est du phosphure d'éthyl triphénylphosphonium dans une proportion comprise entre 0,0001 et 2 % en poids.

8. Le procédé selon l'une quelconque des revendications 1 à 7, dans lequel le rapport molaire du phénol dihydrique à la résine diépoxy linéaire est compris entre 2,5 pour 1 et 3,5 pour 1.

9. Le procédé selon l'une quelconque des revendications 1 à 8, dans lequel l'imidazole est le 2-méthyl imidazole.

10. Un durcisseur préparé par un procédé selon l'une quelconque des revendications 1 à 9.

11. Une composition de revêtement en poudre comprenant le durcisseur selon la revendication 10.
